# EUROPEAN PATENT SPECIFICATION

(11) **EP 3 582 246 B1**
(45) Date of publication and mention of the grant of the patent: **17.03.2021**
(21) Application number: 18177953.9
(22) Date of filing: 15.06.2018
(51) Int. Cl.: H01H 47/02, H02H 3/00

(54) **CONTROL RELAY WITH AN OPERATING MEMBER**
STEUERRELAIS MIT EINEM BEDIENELEMENT
RELAIS DE COMMANDE PRÉSENTANT UN ÉLÉMENT D'ACTIONNEMENT

(43) Date of publication of application: 18.12.2019
(73) Proprietor: ABB Schweiz AG, 5400 Baden (CH)
(72) Inventor: BRENK, Frank, 77756 Hausach (DE); GRESS, Julian, 78050 Villingen-Schwenningen (DE); MÜLLER, Peter, 69221 Dossenheim (DE)
(74) Representative: Maiwald Patent- und Rechtsanwaltsgesellschaft mbH

(56) References cited:
- EP-A2- 1 710 887
- WO-A1-2015/126553
- US-A- 4 351 012

## Description

The invention is about a control relay, having a housing and functional circuitry covered by the housing to perform the function of the control relay, further having a user interface system, said user interface system comprising a directional input unit having an operating member and operable to receive at a point in time an input specifying one of a selection of functional parameters and to communicate the specified functional parameters to the functional circuitry.

The invention is particularly about an industrial control relay.

Industrial control relays, such as voltage, current or temperature monitoring relays, measure one or more physical values.

Based on the value, one or more thresholds can be adjusted. If a threshold is reached, an output relay is switched.

A threshold is an example for the more general term of a functional parameter for such an industrial control relay.

Thresholds and other parameters must be adjusted by the user before usage and before starting the intended functional operation of the industrial control relay. For that purpose, an industrial control relay has a user interface system.

One embodiment of such a user interface system known in the prior art are one or more potentiometers which are located in such a way that their operating members are exceeding the surface of the housing and so are accessible at the outer surface of the housing for operation, for example with a screwdriver. There is one potentiometer for each functional parameter to be adjusted.

However, the number of functional parameters that can be adjusted by the user by means of potentiometers are usually limited by the fact that industrial control relays have, according to acknowledged technical standards, a width of 22.5 mm or 45 mm. Due to the limited space on the surface of the housing, the number of parameters that can be adjusted by potentiometers is usually limited to about three.

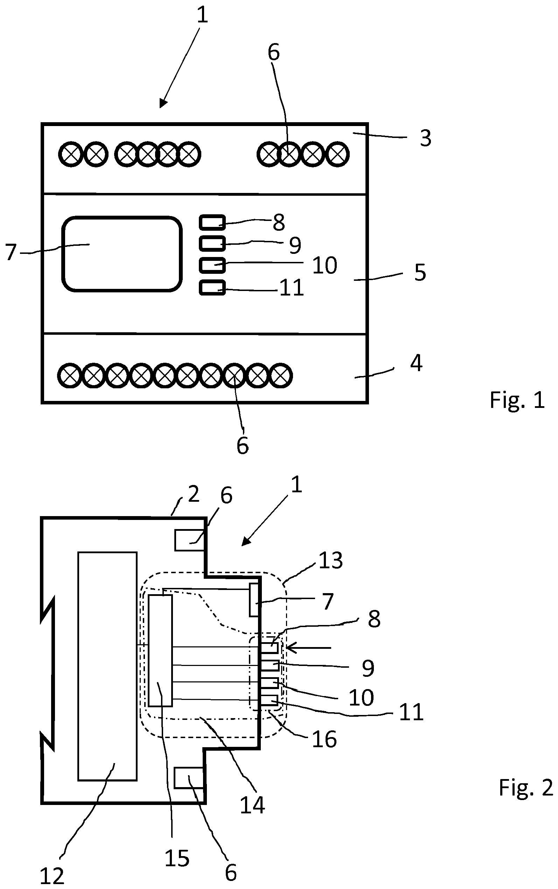

For more parameters, a digital adjustment means could be applied. In such an alternative embodiment of a user interface, a digital display is applied together with a number of push-buttons or keys, the push-buttons exceeding the surface of the housing, as is shown exemplarily in figure 1. Then the push buttons, for example 3 or 4, are typically used to adjust the parameters.

But here again, adjustment of parameters via keys and digital display is cumbersome due to the limited surface area, resulting in a limited area for the display and also in a limited number of possible keys on a product with a width of 22.5mm or 45mm. Also, the keys need to be operable by the user manually, with his fingers, so they cannot be made too small in size. In order to remain readable, also the number of digity that can be displayed on the display is limited.

Due to the limited number of digits on the display, also the scrolling through the digital display using a limited number of keyboard keys requires a fairly large number of individual key pushing actions. As a result configuration respectively parameter setting takes relatively long.

Furthermore, industrial control relays are often working with high voltages, e.g. 690V AC, in control cabinets. To allow a user to adjust parameters the user has to touch the product which brings him very close to dangerous voltages.

Last but not least, keys can be touched unintended. So unintended configuration changes are likely to happen. As a remedy to that, in the known technical art, passwords or other measures are usually used, which brings the problem of adding complexity to the parameter setting procedure and bears the risk of forgotten passwords.

WO 2015/126553 A1 discloses a control relay according to the preamble of claim 1.

So in the light of the state of the art, it is the problem to be solved by the present invention to develop an improved industrial control relay with an operating member, which resolves one or several of the drawbacks on the known user interface systems.

According to the invention, the problem is solved by an industrial control relay with the features of claim 1.

So according to the invention, the said input unit is operable to receive said functional parameter in response to a user operation of rotating and pushing the operating member, wherein the operating member is covered by the housing, wherein the operating member is configured to be operated by the user by means of a tool, wherein the housing has an operational opening giving access of the tool to the operating member.

In a preferable embodiment, the operating member is configured as a push-rotate-wheel.

So according to the invention, instead of using push buttons, a push-rotate wheel is proposed to be used as an operating member, which is operated only with a tool, such as for example a screwdriver, and cannot be operated by hand without such tool.

The opening or slot in the housing for the screwdriver is in the front of the housing. The push-rotate-wheel is neither touchable nor visible from the frontside of the housing, it is covered by the housing. No operating element is higher than the front surface of the product.

For setting a functional parameter, a user sticks the screwdriver in the slot and can then rotate or push the wheel.

The operation of setting a functional parameter according to the invention is more efficient compared to the known art, because the user has only to rotate the screwdriver, in left / right direction, and/ or push the screwdriver, preferably perpendicularly to the surface of the frontside of the housing.

Due to small shaft diameter size of a standard screwdriver, a fast rotation is possible which allows very fast and efficient setup of parameters, such as threshold values.

A further advantage is that the user has a safe distance from dangerous voltages at the circuitry or the operating member, here the push-rotate-wheel, due to the length of the screwdriver. There is a sufficiently long insulation distance between the hand of the user and the potentially voltage carrying part of the circuitry inside the housing at the tip of the screwdriver. In addition, electricians and other operating staff are already quite used to use screwdrivers, even isolated screwdrivers, in many other situations, so it will not be a big challenge for them to change from manually pushing keys at the outside of the housing to putting a screwdriver through a small opening in the front side of the housing an perform push-rotate-operations with the screwdriver.

A further advantage is that an unintended operation of the push-rotate wheel resulting in unintended changes of functional parameters is nearly impossible, as the opening in the housing for accessing the narrow shaft of a screwdriver is small enough to prevent a human finger from being pushed through.

The invention will be elucidated on the basis of an exemplary embodiment shown in the attached drawings, in which
- Figure 1: shows in a schematic and exemplary way a front side view of an industrial control relay according to state of the art,
- Figure 2: shows in a schematic and exemplary way a cross-sectional view of the industrial control relay according to the state of the art.
- Figure 3: shows in a schematic and exemplary way a front side view of an industrial control relay according to the invention,
- Figure 4: shows in a schematic and exemplary way a cross-sectional view of the industrial control relay according to the invention.

Figure 1 shows in a schematic and exemplary way a front side view of an industrial control relay 1, which has a housing 2. The control relay 1 has a top section 3, a bottom section 4 and a central section 5. At the top and bottom sections 3, 4 there are arranged a number of terminals 6 for connection of conductors. Number and kind of the terminals can be any as is routinely applied in industrial control relay design.

As is exemplarily shown in figure 2, there is inside the housing 2, covered by the housing 2, functional circuitry 12 which is operable to perform the function of the industrial control relay. Functional circuitry 12 is shown here exemplarily and schematically as on function block. It is well understood that in an embodiment, the functional circuitry 12 can be an electronic circuitry, including one or several microprocessors, ASICs or other electronic components, or it can be an electro-mechanical unit, or a combination of both electronic circuitry and electro-mechanical elements.

The control relay 1 further has a user interface system 13. The user interface system 13 comprises a directional input unit 14 and a display 7 which is arranged in the central section 5. The directional input unit 14 has input circuitry 15 and an operating member 16, in the form of a keypad 16 with - in this exemplary embodiment - four keys 8, 9, 10, 11. The keys 8, 9, 10, 11 and the display 7 are communicatively coupled to the input circuitry 15. The input circuitry 15 is communicatively connected to the functional circuitry 12. The display 7 is communicatively coupled to the input circuitry 15. The display shows to the user a selection of functional parameters, and by operating the keys the user can, in a way which is basically known in the art, select and/or modify such functional parameters, including possibly scrolling through a hierarchical menu structure which would be shown on the display 7. So the directional input unit 14 would receive at a point in time an input specifying one of a selection of functional parameters and would communicate the specified functional parameters to the functional circuitry 12.

They keys 8, 9, 10, 11 of the keypad are reaching out of the surface of the frontside of the housing 2, as is shown in figure 2, which has the drawbacks as described in the introductory section of the present specification.

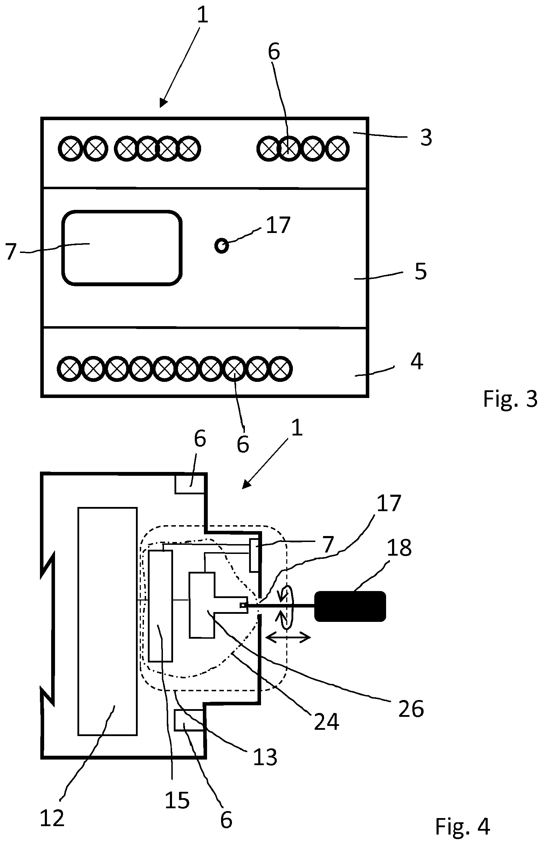

Figures 3 and 4 show an embodiment with the solution to the technical problems that come with the prior art, according to the present invention.

The control relay 1' as shown in figures 3 and 4 also has a user interface system 13. The user interface system 13 comprises a directional input unit 24 and a display 7 which is arranged in the central section 5. The directional input unit 24 has input circuitry 15 and an operating member 26.

The operating member 26 is configured as a push-rotate-wheel 26.

The push-rotate wheel 26 and the display 7 are communicatively coupled to the input circuitry 15. The input circuitry 15 is communicatively connected to the functional circuitry 12.

The directional input unit 24 is operable to receive a functional parameter in response to a user operation of rotating and pushing the push-rotate-wheel 26.

The push-rotate-wheel 26 is located within the housing 2, it is covered by the housing 2. It cannot be touched from a user outside the housing 2. The push-rotate-wheel 26 is configured to be operated by the user by means of a tool 18, in the example shown here a screwdriver 18, only. The housing 2 has an operational opening 17 giving access of the tool 18 to the push-rotate-wheel. The push-rotate-actions which the user can perform are symbolized by respective arrows in figure 4.

The operational opening 17 in the housing for the screwdriver 18 is in the front of the housing 2. The push-rotate-wheel 26 is neither touchable nor visible from the front side of the housing 2, it is covered by the housing 2. No operating element is higher than the front surface of the product.

For setting a functional parameter, a user sticks the screwdriver 18 in the slot 17 and can then rotate and/or push the push-rotate-wheel 26.

The operation of setting a functional parameter according to the invention is more efficient compared to the known art, because the user has only to rotate the screwdriver 18, in left / right direction, and/or push the screwdriver 18, preferably perpendicularly to the surface of the front side of the housing 2.

Due to small shaft diameter size of a standard screwdriver 18, as it is used here, a fast rotation is possible which allows very fast and efficient setup of parameters, such as threshold values.

### List of reference signs

- 1: Industrial control relay
- 2: Housing
- 3: Top section
- 4: Bottom section
- 5: Central section
- 6: Terminal
- 7: display
- 8: Key
- 9: Key
- 10: Key
- 11: Key
- 12: Functional circuitry
- 13: User interface system
- 14: Directional input unit
- 15: Input circuitry
- 16: Operating member, keyboard
- 17: Operational opening
- 18: screwdriver
- 24: Directional input unit
- 26: Operating member, push-rotate-wheel

## Claims

1. Control relay (1), having a housing (2) and functional circuitry (12) covered by the housing (2) to perform the function of the control relay (1), further having a user interface system (13), said user interface system (13) comprising a directional input unit (14) having an operating member (16) and operable to receive at a point in time an input specifying one of a selection of functional parameters and to communicate the specified functional parameters to the functional circuitry (12), **characterized in that** the said input unit (24) is operable to receive said functional parameter in response to a user operation of rotating and pushing the operating member (26), wherein the operating member (26) is covered by the housing (2), wherein the operating member (26) is configured to be operated by the user by means of a tool (18), wherein the housing (2) has an operational opening (17) giving access for the tool (18) to the operating member (26).

2. Control relay (1) according to claim 1, wherein the operating member (26) is configured as a push-rotate-wheel (26).

3. Control relay (1) according to claim 1 or 2, wherein the user interface system (13) further comprises a digital display (7) which is communicatively connected to the operating member (26) or the directional input unit (24), for displaying the selection of functional parameters to the user.

4. Control relay (1) according to claim 1, wherein the housing (2) has a width of 22.5 mm or 45 mm.

## Patentansprüche

1. Steuerrelais (1), das ein Gehäuse (2) und eine Funktionsschaltung (12) aufweist, die von dem Gehäuse (2) abgedeckt ist, um die Funktion des Steuerrelais (1) auszuführen, das ferner ein Benutzerschnittstellensystem (13) aufweist, wobei das Benutzerschnittstellensystem (13) eine Richtungseingabeeinheit (14) mit einem Bedienelement (16) aufweist und betreibbar ist, um zu einem Zeitpunkt eine Eingabe zu empfangen, die einen aus einer Auswahl von Funktionsparametern spezifiziert, und um die spezifizierten Funktionsparameter an die Funktionsschaltung (12) zu übermitteln, **dadurch gekennzeichnet, dass** die Eingabeeinheit (24) so betreibbar ist, dass sie den Funktionsparameter in Reaktion auf eine Benutzerbetätigung des Drehens und Schiebens des Bedienelements (26) empfängt, wobei das Bedienelement (26) durch das Gehäuse (2) abgedeckt ist, wobei das Bedienelement (26) so konfiguriert ist, dass es durch den Benutzer mittels eines Werkzeugs (18) betätigt werden kann, wobei das Gehäuse (2) eine Betätigungsöffnung (17) aufweist, die dem Werkzeug (18) Zugang zu dem Bedienelement (26) gibt.

2. Steuerrelais (1) nach Anspruch 1, wobei das Bedienelement (26) als Druck-Dreh-Rad (26) ausgebildet ist.

3. Steuerrelais (1) nach Anspruch 1 oder 2, wobei das Benutzerschnittstellensystem (13) ferner eine digitale Anzeige (7) umfasst, die mit dem Bedienelement (26) oder der Richtungseingabeeinheit (24) kommunikativ verbunden ist, um dem Benutzer die Auswahl der Funktionsparameter anzuzeigen.

4. Steuerrelais (1) nach Anspruch 1, wobei das Gehäuse (2) eine Breite von 22,5 mm oder 45 mm aufweist.

## Revendications

1. Relais (1) de commande, comprenant un boîtier (2) et une circuiterie fonctionnelle (12) recouverte par le boîtier (2) pour réaliser la fonction du relais (1) de commande, comprenant en outre un système (13) d'interface d'utilisateur, ledit système (13) d'interface d'utilisateur comportant une unité (14) d'entrée directionnelle dotée d'un organe (16) d'actionnement et utilisable pour recevoir à un instant une entrée spécifiant un paramètre parmi une sélection de paramètres fonctionnels et pour communiquer les paramètres fonctionnels spécifiés à la circuiterie fonctionnelle (12), **caractérisé en ce que** ladite unité (24) d'entrée est utilisable pour recevoir ledit paramètre fonctionnel en réponse à une opération de l'utilisateur consistant à tourner et à presser l'organe (26) d'actionnement, l'organe (26) d'actionnement étant recouvert par le boîtier (2), l'organe (26) d'actionnement étant configuré pour être actionné par l'utilisateur au moyen d'un outil (18), le boîtier (2) présentant une ouverture opérationnelle (17) permettant à l'outil (18) d'accéder à l'organe (26) d'actionnement.

2. Relais (1) de commande selon la revendication 1, l'organe (26) d'actionnement étant configuré comme une molette (26) à enfoncement-rotation.

3. Relais (1) de commande selon la revendication 1 ou 2, le système (13) d'interface d'utilisateur comportant en outre un affichage numérique (7) qui est relié de manière communicative à l'organe (26) d'actionnement ou à l'unité (24) d'entrée directionnelle, pour présenter la sélection de paramètres fonctionnels à l'utilisateur.

4. Relais (1) de commande selon la revendication 1, le boîtier (2) présentant une largeur de 22,5 mm ou 45 mm.
